# EUROPÄISCHE PATENTANMELDUNG

(11) **EP 4 335 299 A1**
(43) Veröffentlichungstag der Anmeldung: **13.03.2024**
(21) Anmeldenummer: 23182356.8
(22) Anmeldetag: 29.06.2023
(51) Int. Cl.: A23C 11/10, A23L 3/16, A23L 7/104

(54) **ENERGIEEFFIZIENTE HERSTELLUNG VON LEBENSMITTELPRODUKTEN AUF PFLANZENBASIS**

(30) Priorität: 08.09.2022 DE 102022122825
(71) Anmelder: Steinecker GmbH, 85356 Freising-Attaching (DE)
(72) Erfinder: Oehmichen, Thomas, 85356 Freising-Attaching (DE); Hoeller, Stefan, 85356 Freising-Attaching (DE); Scheidel, Alexander, 85356 Freising-Attaching (DE); Ottmann, Norbert, 85356 Freising-Attaching (DE); Runge, Torsten, 85356 Freising-Attaching (DE)
(74) Vertreter: Grünecker Patent- und Rechtsanwälte PartG mbB

(57) **Zusammenfassung**

Die vorliegende Erfindung betrifft eine Anlage zur Herstellung von Lebensmitteln auf Pflanzenbasis. Die Anlage umfasst ein beheizbares Maischegefäß, das für eine enzymatische Hydrolyse einer stärkehaltigen Suspension ausgebildet ist, insbesondere einen ersten Wärmetauscher, der über eine Auslassleitung mit einem Auslass des Maischegefäßes zum Kühlen eines von dem Maischegefäß ausgelassenen Produkts verbunden ist, einen Energiespeichertank, der mit dem Maischegefäß zur Lieferung von Wärme und insbesondere mit dem ersten Wärmetauscher verbunden ist, und der zur Aufnahme von in der Anlage gewonnener rekuperativer Wärme ausgebildet und angebunden ist, eine Fest-Flüssig-Trenneinrichtung, die über eine Auslassleitung mit einem Auslass des Maischegefäßes verbunden ist und dazu ausgebildet ist, aus einem von dem Maischegefäß ausgelassenen Produkt eine flüssige Produktkomponente zu trennen und eine Vorrichtung zur Pasteurisierung oder Sterilisation, die dazu ausgebildet ist, die von der Fest-Flüssig-Trenneinrichtung bereitgestellte flüssige Produktkomponente zu pasteurisieren oder sterilisieren.

## Beschreibung

### Gebiet der Erfindung

Die vorliegende Erfindung betrifft die energieeffiziente Herstellung von Lebensmittelprodukten auf Pflanzenbasis, insbesondere von Milchersatzprodukt-Getränken, mithilfe enzymatischer Hydrolyse von Stärketrägern.

### Stand der Technik

Lebensmittel auf Pflanzenbasis, insbesondere Getränke, die auf Grundlage von Pflanzen, etwa Nüssen, Hülsenfrüchte, Samen oder verschiedenen Getreidesorten, hergestellt werden, finden als Alternative zu Milchprodukten (Milchersatzprodukte) zunehmend Verbreitung. Bei der Herstellung von Milchersatzprodukt-Getränken werden die Nüsse, Hülsenfrüchte, Samen beziehungsweise Getreidekörner zerkleinert, mit Wasser vermengt und beispielsweise einer enzymatischen Hydrolyse unterzogen, um die langkettige Stärke in kurzkettige Zuckermoleküle aufzuspalten. Die genaue Prozessführung der Hydrolyse ist abhängig vom jeweiligen Rezept und bedingt die gewünschten Produkteigenschaften wie beispielsweise die Süße des Produktes und die Vollmundigkeit desselben.

Bei der enzymatischen Hydrolyse der Stärke wird die makromolekulare Struktur der Stärke aufgespalten, und die so aufgespaltene Struktur wird verflüssigt. Je nach eingesetztem Enzym werden beispielsweise einzelne Maltose oder Glukosemoleküle von Randbereichen der Stärkekette abgespalten (β-Amylase und Glukosidase), oder es werden die Stärkeketten in einem inneren Bereich (durch die α-Amylase) hydrolysiert und sie spalten sich somit in Dextrine auf.

Für die Herstellung von Hafergetränken beispielsweise wird Hafer in Form von Flocken oder Mehl verwendet. Zur Mischung des Hafermehls oder der Flocken beziehungsweise allgemein von Getreidemehl/-flocken oder zerkleinerten Nüssen, Hülsenfrüchte oder Samen mit Wasser werden Dispergierer verwendet, welche sich durch hohe Scherkräfte auszeichnen, um das Getreide vollständig mit dem Wasser zu vermengen. Diese Vermischung wird unterhalb der Verkleisterungstemperatur durchgeführt, um einer Viskositätserhöhung und daraus resultierenden Verstopfung von Leitungen vorzubeugen. Die Dispergierung des Getreides in Wasser wird herkömmlich entweder durch Inline-Dispergieren oder mithilfe von Vakuummischern durchgeführt.

Die so entstandene Suspension wird auf die Wirktemperatur des zur nachfolgenden enzymatischen Hydrolyse verwendeten Enzyms temperiert und verkleistert. Ist die Wirktemperatur erreicht, wird das jeweilige Enzym zudosiert, und die Stärke wird über eine gewünschte Zeitdauer mithilfe des Enzyms hydrolysiert. Während dieser Hydrolyse können mehrere verschiedene Enzyme eingesetzt und unterschiedliche Temperaturen eingestellt werden, das heißt es wird ein rezeptabhängiges Temperaturprofil durchlaufen, bei welchen bei dem Wirkoptimum des jeweiligen Enzymes eine Rast (die Temperatur wird über einen bestimmten Zeitraum gehalten) durchgeführt wird. Die Zugabe der Enzyme kann auch bereits bei der Vermengung der Rohstoffe mit Wasser oder unmittelbar danach stattfinden. Zur Erhitzung der Suspension können in dem Behälter vorhandene Wärmetauscherflächen, sogenannte Boden- und Zargenheizflächen, oder außerhalb des Gefäßes befindliche Wärmeüberträger genutzt werden, die im Durchfluss das Produkt auf die gewünschte Zieltemperatur erhitzen. Solche Wärmeüberträger werden beispielsweise in Form von Rohrbündelwärmetauschern oder auch Plattenwärmetauschern eingesetzt.

Nach Abschluss der enzymatischen Hydrolyse wird die Suspension einer Fest-Flüssig-Trennung unterzogen, wobei beispielsweise Dekanterzentrifugen oder Filter wie etwa Maischefilter eingesetzt werden können. Das daraus resultierende Produkt wird gekühlt und typischer Weise bei relativer niedriger Temperatur in Mischtanks zur endgültigen Trinkstärke ausgemischt, und es kann mit weiteren Zutaten, wie beispielsweise Kalzium, Salz, Proteine, Zucker, Öl, Gewürze, Aromen, Stabilisierungsmittel, versetzt werden. Vor der Abfüllung beziehungsweise Zwischenlagerung in Aseptiktanks wird das abzufüllende Produkt einer Vorrichtung zur Pasteurisierung oder Sterilisation (beispielsweise einer Kurzzeiterhitzungsvorrichtung oder Ultrahocherhitzungsvorrichtung) zugeführt, in der das Produkt zum Zweck der Abtötung von Keimen und Mikroorganismen und zur Haltbarmachung relativ stark erhitzt wird.

Das gesamte Verfahren zur Herstellung von Lebensmittelprodukten auf Pflanzenbasis mit seinen diversen Aufheiz- und Abkühlschritten erfordert herkömmlich einen relativ hohen Energieverbrauch. Angesichts dessen liegt der vorliegenden Erfindung die Aufgabe zugrunde, das Energiemanagement in einer Anlage zur Herstellung von Lebensmittelprodukten auf Pflanzenbasis dahingehend gegenüber dem Stand der Technik zu verbessern, dass Energieverluste weitgehend vermieden werden.

### Beschreibung der Erfindung

Die oben genannte Aufgabe wird durch eine Anlage zur Herstellung von Lebensmitteln auf Pflanzenbasis gemäß Patentanspruch 1 gelöst. Die Anlage umfasst ein beheizbares Maischegefäß, das insbesondere für eine enzymatische Hydrolyse einer stärkehaltigen Suspension ausgebildet ist, insbesondere einen ersten Wärmetauscher, der über eine Auslassleitung mit einem Auslass des Maischegefäßes zum Kühlen eines von dem Maischegefäß ausgelassenen Produkts verbunden ist und einen Energiespeichertank, der mit dem Maischegefäß zur Lieferung von Wärme (Heißwasser als Heizwasser) und insbesondere mit dem ersten Wärmetauscher verbunden ist, und der zur Aufnahme von in der Anlage gewonnener rekuperativer Wärme ausgebildet und (beispielsweise über den ersten Wärmetauscher) angebunden ist. Weiterhin umfasst die Anlage eine Fest-Flüssig-Trenneinrichtung, die über eine Auslassleitung mit einem Auslass des Maischegefäßes verbunden ist und dazu ausgebildet ist, aus einem von dem Maischegefäß ausgelassenen Produkt eine flüssige Produktkomponente zu trennen. Zudem umfasst die Anlage eine Vorrichtung zur Pasteurisierung oder Sterilisation, die dazu ausgebildet ist, die von der Fest-Flüssig-Trenneinrichtung bereitgestellte flüssige Produktkomponente, gegebenenfalls nachdem dieser eine Zutat (beispielsweise Kalzium, Salz, Proteine, Zucker, Öl, Gewürze, Aromen, Stabilisierungsmittel, etc.) und/oder Wasser zugesetzt wurden, zu pasteurisieren oder sterilisieren.

Hier und im Weiteren versteht sich, dass, wenn eine Komponente der Anlage als mit einer anderen Komponente der Anlage verbunden beschrieben wird, diese Komponenten direkt oder über eine weitere Komponente miteinander verbunden sind.

Das Lebensmittelprodukt auf Pflanzenbasis kann ein Produkt, insbesondere ein Getränk, auf Basis von Nüssen, Hülsenfrüchte, Samen und/oder Getreide, und insbesondere ein Hafergetränk, sein.

Der Energiespeichertank kann als Schichtenspeichertank vorgesehen werden, der in verschiedenen Teilbereichen Waser/Wärme mit verschiedenen Temperaturniveaus, beispielsweise zwischen 60 °C und 110 °C, speichern kann. Prinzipiell kann in einem geschlossenen Wärmespeichersystem ein Wärmeträger im Energiespeichertank immer im Kreislauf zwischen einer oder mehreren Wärmequellen und einem oder mehreren Wärmeverbrauchern über den Energiespeichertank zirkuliert werden, oder es kann in einem offenen Wärmespeichersystem im "Energiespeichertank" befindliches Wasser sowohl für Heizzwecke als auch für Warmwasserverbraucher verwendet werden.

Von dem Energiespeichertank an das Maischegefäß geliefertes Heißwasser kann durch eine zusätzlich vorgesehene Nachheizeinrichtung, die mit primärer Energie betrieben sein kann, nachgeheizt werden. Es können mehr als lediglich ein zentraler Energiespeichertank, beispielsweise ein Hochtemperatur- und ein Niedertemperatur-Schichtenspeichertank, vorgesehen sein. Der eine oder die mehreren Energiespeichertanks können Wasser als Wärmeträgermedium für verschiedene Verbraucher der Anlage vorhalten und dienen der Zwischenspeicherung von in der Anlage anfallender rekuperativer Energie von verschiedenen Komponenten innerhalb oder außerhalb der Anlage und verbessert so das Energiemanagement insbesondere der Anlage wesentlich. Als Wärmeträgermedium kann beispielsweise auch Thermoöl eingesetzt werden.

Weiterhin kann die Anlage einen Kaltwassertank zum Speichern von Kaltwasser (beispielsweise mit einer Temperatur zwischen 5 °C und 20 °C), einen zweiten Wärmetauscher, der einerseits mit dem Kaltwassertank und/oder dem Energiespeichertank und andererseits mit der Fest-Flüssig-Trenneinrichtung zum Abkühlen der von der Fest-Flüssig-Trenneinrichtung bereitgestellten flüssigen Produktkomponente verbunden ist, und einen Tank, der dazu ausgebildet ist, die von dem zweiten Wärmetauscher gekühlte flüssige Produktkomponente zu speichern und mit Zutaten und/oder Wasser zu mischen, um ein Lebensmittelprodukt zu erhalten oder ein durch Mischen (mit einer entsprechenden Mischeinrichtung, beispielsweise mit einer Leitung, durch die die gekühlte flüssige Produktkomponente strömt, verbundenen Dosierreinrichtung) der gekühlten flüssigen Produktkomponente mit Zutaten und/oder Wasser erhaltenes Lebensmittelprodukt zu speichern. Weiterhin kann die Anlage einen dritten Wärmetauscher umfassen, der mit einer mit einem Auslass des Tanks (Misch- oder Puffertanks) verbundenen Auslassleitung zum Wiedergewinnen von Kälte aus dem aus dem Tank ausgelassenen Lebensmittelprodukt verbunden ist, umfassen.

Gemäß dieser Weiterbildung kann also die "Kälteenergie", des in dem Tank gespeicherten Lebensmittelprodukts effizient rückgewonnen werden. Der physikalisch inkorrekte Begriff "Kälteenergie" wird hier, wie im technischen Gebiet üblich, jargonhaft verwendet, um das Kühlen eines wärmeren Mediums mithilfe (der "Kälteenergie", im Weiteren werden die Anführungszeichen weggelassen) eines kälteren Medium zu bezeichnen. Sowohl für das Erwärmen von Medien als auch das Kühlen von Medien muss in der Anlage Energie bereitgestellt werden. Es ist somit vorteilhaft ein gekühltes Medium zum Kühlen eines zu kühlenden Mediums einzusetzen.

So kann beispielsweise Kaltwasser aus einem oberen Bereich des Kaltwassertanks durch das aus dem Mischtank ausgelassene Lebensmittelprodukt weiter abgekühlt werden und beispielsweise zur weiteren Verwendung in einem unteren Bereich des Kaltwassertanks zwischengespeichert werden. Hierzu ist der der dritte Wärmetauscher mit dem Kaltwassertank verbunden. Der dritte Wärmetauscher kann auch mit dem zweiten Wärmetauscher, der dem Abkühlen der von der Fest-Flüssig-Trenneinrichtung bereitgestellten flüssigen Produktkomponente dient, verbunden sein, sodass die Lebensmittelkomponente im Gegenstrom der Abkühlung der flüssigen Produktkomponente dient.

Die Rückgewinnung der Kälteenergie des in dem Tank gespeicherten Lebensmittels ist energetisch besonders wünschenswert, wenn die flüssige Produktkomponente nach der (Vor)Kühlung in dem zweiten Wärmetauscher durch eine zusätzlich vorgesehene, beispielsweise mit Primärenergie betriebene, Kühleinrichtung weiter abgekühlt wird.

Gemäß einer weiteren Weiterbildung umfasst die Anlage einen vierten Wärmetauscher, der mit dem zweiten Wärmetauscher und dem Energiespeichertank verbunden ist. Das durch das Kühlen der flüssigen Produktkomponente erwärmte Kaltwasser kann in dem vierten Wärmetauscher durch heißes Wasser aus einem oberen Bereich des Energiespeichertanks in dem vierten Wärmetauscher weiter erwärmt werden und als gegenüber dem heißen Wasser kälteres Wasser in einem unteren Bereich des Energiespeichertanks zwischengespeichert werden.

Gemäß einer weiteren Weiterbildung umfasst die Anlage eine Abwärmerückgewinnungseinrichtung, die dazu ausgebildet ist, Abwärme von der Vorrichtung zur Pasteurisierung oder Sterilisation zurückzugewinnen. Im Gegensatz zum Stand der Technik geht diese Abwärme also nicht verloren. Beispielsweise ist die Vorrichtung zur Pasteurisierung oder Sterilisation eine Ultrahocherhitzungsvorrichtung, die dazu ausgebildet ist, ein Dampf-Infusionsverfahren oder ein Dampf-Injektionsverfahren auszuführen, und die einen Flash-Kühler, der dazu ausgebildet ist, Dampf aus dem sterilisierten Produkt auszutreiben, und einen Kondensator, der dazu ausgebildet ist, den ausgetriebenen Dampf zu kondensieren, umfasst, wobei die Abwärmerückgewinnungseinrichtung dazu ausgebildet ist, die Abwärme in Form der Kondensationswärme des Dampfes oder in Form der Kondensationswärme des Dampfes und der Wärme des Kondensats zurückzugewinnen. Eine andere beispielhafte Ausführung beinhaltet eine Vorrichtung die als Dampf-Infusionsverfahren oder als Dampf-Injektionsverfahren ausgebildet ist und ohne Flash-Kühler ausgestattet ist, sodass der Dampf nicht als Kondensat aus dem Produkt entfernt wird. Hierdurch würde sich die Trockenmasse des Produktes verringern, die Temperatur des aufgeheizten Produktes könnte jedoch mit einem Wärmetauscher rückgewonnen werden und es würde kein Kondensat mit niedrigerem Temperaturniveau anfallen. Die Anlage ist so ausgeführt, dass die Vorrichtung zur Pasteurisierung mit dem Energiespeichertank verbunden ist, sodass, beispielsweise über Wärmetauscher, die rekuperativ gewonnene Energie im Energiespeichertank zwischengespeichert wird.

Allgemein kann in der Anlage anfallende Abwärme, etwa von Kompressoren oder einer Kälteanlage, durch eine Wärmepumpe auf ein Niveau gepumpt werden, welches beispielsweise zur Beheizung des Energiespeichertanks, des Maischegefäßes und/oder der Vorrichtung zur Pasteurisierung oder Sterilisation, beispielsweise Kurzzeiterhitzungsvorrichtung oder Ultrahocherhitzungsvorrichtung, genutzt werden kann. Auch kann allgemein die Kühlung eines in der Anlage genutzten Kälteträgers (beispielsweise Glykols) mithilfe einer Wärmepumpe erfolgen. Beispielsweise kann so eine rekuperative Kühlung für eine Kühlung des einen oder der mehreren Tanks (Misch- oder Puffertanks) und/oder einer möglicherweise vorgesehenen Kühlung des Kaltwassertanks und/oder auch der Vorrichtung zur Pasteurisierung oder Sterilisation erreicht werden.

Gemäß einer weiteren Weiterbildung umfasst die Anlage eine Dampferzeugungseinrichtung, die dazu ausgebildet ist, Wasser zu verdampfen und den Dampf an die Ultrahocherhitzungsvorrichtung zu liefern. Dieses zu verdampfende Wasser kann mithilfe von in dem Energiespeichertank gespeicherter Wärme vorgeheizt werden. Andererseits kann die Abwärmerückgewinnungseinrichtung mit dem Energiespeichertank zum Speichern von von der Vorrichtung zur Pasteurisierung oder Sterilisation zurückgewonnener Wärme verbunden sein.

Des Weiteren kann die Anlage einen Warmwassertank zum Speichern von Warmwasser (beispielsweise mit einer Temperatur zwischen 70 °C und 90 °C) und eine Vormaischeinrichtung, die an dem Maischegefäß angeschlossen und mit dem Warmwassertank verbunden und zum Mischen von von dem Warmwassertank gelieferten Warmwasser mit einem Pflanzensubstrat ausgebildet ist, umfassen, wobei der Warmwassertank mit dem vierten Wärmetauscher verbunden ist. Durch die Verbindung von dem Warmwassertank mit dem zweiten und/oder vierten Wärmetauscher kann die durch Kühlen der von der Fest-Flüssig-Trenneinrichtung bereitgestellten flüssigen Produktkomponente anfallende Wärme dem Warmwasserspeicher zugeführt werden.

Der Warmwassertank und/oder der Energiespeichertank kann mit der Abwärmerückgewinnungseinrichtung zum Speichern von von der Vorrichtung zur Pasteurisierung oder Sterilisation zurückgewonnener Wärme verbunden sein, um zumindest einen Teil der dort gewonnenen Abwärme zwischenzuspeichern.

Die oben genannte Aufgabe wird auch durch Verfahren zur Herstellung von Lebensmitteln auf Pflanzenbasis gelöst. Diese Verfahren können von der Anlage gemäß einer der oben beschriebenen Beispiele ausgeführt werden, und die oben beschriebenen einzelnen Komponenten der Anlage können mit den jeweils beschriebenen Funktionen in den Verfahren Verwendung finden.

Es wird ein Verfahren zur Herstellung von Lebensmitteln auf Pflanzenbasis bereitgestellt, das die folgenden Schritte aufweist. Wärme wird aus einem Energiespeichertank einem Maischegefäß zugeführt. Hierzu kann direkt Heißwasser aus dem Energiespeichertank zum Beheizen des Maischegefäßes verwendet werden, oder Heißwasser aus dem Energiespeichertank kann zunächst außerhalb des Energiespeichertanks weiter erhitzt werden und dann zum Beheizen des Maischegefäßes verwendet werden. In dem Maischegefäß erfolgt ein Einmaischen, beispielsweise eine enzymatische Hydrolyse, einer in das Maischegefäß eingefüllten Suspension, die Wasser und ein Pflanzensubstrat umfasst, um ein Produkt zu erhalten. Dieses Produkt wird aus dem Maischegefäß ausgeleitet. Es kann abgekühlt werden und dem Maischegefäß für eine weitere enzymatische Hydrolyse bei etwas niedrigerer Temperatur wieder zugeführt werden oder in ein anderes Maischegefäß geleitet werden. Wenn die gesamte enzymatische Hydrolyse beendet ist, erfolgt eine Fest-Flüssig-Trennung des ausgeleiteten Produkts, um eine flüssige Produktkomponente zu erhalten.

Diese flüssige Produktkomponente wird mithilfe von von einem Kaltwassertank gelieferten Kaltwasser und/oder von von dem Energiespeichertank gelieferten Wasser gekühlt. Die gekühlte flüssige Produktkomponente kann mithilfe einer Kühleinrichtung weiter abgekühlt werden und die gekühlte flüssige Produktkomponente wird in einem Mischtank gelagert. In dem Mischtank wird sie mit Zutaten und/oder Wasser versetzt, um ein Lebensmittel zu erhalten. Das Lebensmittel wird aus dem Mischtank ausgeleitet, und Kälte aus dem aus dem Mischtank ausgeleiteten Lebensmittel wird wiedergewonnen, wodurch das erwärmte Lebensmittel erwärmt wird. Das erwärmte Lebensmittel wird dann mithilfe einer Vorrichtung zur Pasteurisierung oder Sterilisation pasteurisiert oder sterilisiert. Anfallende Abwärme der Vorrichtung zur Pasteurisierung oder Sterilisation kann gemäß einer Ausführungsform wiedergewonnen und beispielsweise in dem Energiespeichertank zwischengespeichert werden.

Ein weiteres bereitgestelltes Verfahren zur Herstellung von Lebensmitteln auf Pflanzenbasis umfasst die folgenden Schritte. Wärme wird aus einem Energiespeichertank einem Maischegefäß zugeführt. Hierzu kann direkt Heißwasser aus dem Energiespeichertank zum Beheizen des Maischegefäßes verwendet werden, oder Heißwasser aus dem Energiespeichertank kann zunächst außerhalb des Energiespeichertanks weiter erhitzt werden und dann zum Beheizen des Maischegefäßes verwendet werden. Dies ist insbesondere vorteilhaft, falls das Energieniveau der rekuperativ gewonnenen Abwärme aus beispielsweise der Pasteurisiervorrichtung ein zu niedriges Energieniveau zum Beheizen des Maischgefäßes aufweist. In dem Maischegefäß erfolgt ein Einmaischen, beispielsweise eine enzymatische Hydrolyse, einer in das Maischegefäß eingefüllten Suspension, die Wasser und ein Pflanzensubstrat umfasst, um ein Produkt zu erhalten. Dieses Produkt wird aus dem Maischegefäß ausgeleitet. Es kann abgekühlt werden und dem Maischegefäß für eine weitere enzymatische Hydrolyse bei etwas niedrigerer Temperatur wieder zugeführt werden oder in ein anderes Maischegefäß geleitet werden. Wenn die gesamte enzymatische Hydrolyse beendet ist, erfolgt eine Fest-Flüssig-Trennung des ausgeleiten Produkts, um eine flüssige Produktkomponente zu erhalten.

Diese flüssige Produktkomponente wird mithilfe von von einem Kaltwassertank gelieferten Kaltwasser und/oder von von dem Energiespeichertank gelieferten Wasser gekühlt. Die gekühlte flüssige Produktkomponente kann mithilfe einer Kühleinrichtung weiter abgekühlt werden und wird in einem Mischtank gelagert. In dem Mischtank wird sie mit Zutaten und/oder Wasser versetzt, um ein Lebensmittel zu erhalten. Das Lebensmittel wird aus dem Mischtank ausgeleitet und mithilfe einer Vorrichtung zur Pasteurisierung oder Sterilisation pasteurisiert oder sterilisiert. Wärme von der Vorrichtung zur Pasteurisierung oder Sterilisation wird zurückgewonnen.

Ein weiteres bereitgestelltes Verfahren zur Herstellung von Lebensmitteln auf Pflanzenbasis umfasst die folgenden Schritte. Wärme wird aus einem Energiespeichertank einem Maischegefäß zugeführt. Hierzu kann direkt Heißwasser aus dem Energiespeichertank zum Beheizen des Maischegefäßes verwendet werden, oder Heißwasser aus dem Energiespeichertank kann zunächst außerhalb des Energiespeichertanks weiter erhitzt werden und dann zum Beheizen des Maischegefäßes verwendet werden. In dem Maischegefäß erfolgt ein Einmaischen, beispielsweise eine enzymatische Hydrolyse, einer in das Maischegefäß eingefüllten Suspension, die Wasser und ein Pflanzensubstrat umfasst, um ein Produkt zu erhalten. Dieses Produkt wird aus dem Maischegefäß ausgeleitet. Es kann abgekühlt werden und dem Maischegefäß für eine weitere enzymatische Hydrolyse bei etwas niedrigerer Temperatur wieder zugeführt werden oder in ein anderes Maischegefäß geleitet werden. Wenn die enzymatische Hydrolyse beendet ist, erfolgt eine Fest-Flüssig-Trennung des ausgeleiten Produkts, um eine flüssige Produktkomponente zu erhalten.

Diese flüssige Produktkomponente wird mithilfe von von einem Kaltwassertank gelieferten Kaltwasser und/oder von von dem Energiespeichertank gelieferten Wasser gekühlt. Die gekühlte flüssige Produktkomponente wird mit Zutaten und/oder Wasser versetzt, um das Lebensmittel zu erhalten. Das Lebensmittel wird mithilfe einer Vorrichtung zur Pasteurisierung oder Sterilisation pasteurisiert oder sterilisiert und Wärme von der Vorrichtung zur Pasteurisierung oder Sterilisation wird zurückgewonnen. Vor der Pasteurisation oder Sterilisation kann das Lebensmittel in einem Puffertank zwischengespeichert werden.

Im Folgenden werden Ausführungsformen einer Anlage und eines erfindungsgemäßen Verfahrens unter Bezugnahme auf die Figuren beschrieben. Die beschriebenen Ausführungsformen sind in jeder Hinsicht lediglich als illustrativ und nicht als einschränkend anzusehen, und verschiedene Kombinationen der angeführten Merkmale sind in der Erfindung eingeschlossen.
- Figur 1: veranschaulicht eine Anlage zur Herstellung von Lebensmitteln auf Pflanzenbasis gemäß einer Ausführungsform der vorliegenden Erfindung.
- Figur 2: ist ein Flussdiagramm, das ein Verfahren zur Herstellung von Lebensmitteln auf Pflanzenbasis gemäß einer Ausführungsform der vorliegenden Erfindung veranschaulicht, in dem Kälte aus einem aus einem Mischtank ausgeleiteten Lebensmittel wiedergewonnen wird.
- Figur 3: ist ein Flussdiagramm, das ein Verfahren zur Herstellung von Lebensmitteln auf Pflanzenbasis gemäß einer Ausführungsform der vorliegenden Erfindung veranschaulicht, in dem Abwärme von einer Vorrichtung zur Pasteurisierung oder Sterilisation eines Lebensmittels wiedergewonnen wird.
- Figur 4: ist ein Flussdiagramm, das ein Verfahren zur Herstellung von Lebensmitteln auf Pflanzenbasis gemäß einer weiteren Ausführungsform der vorliegenden Erfindung veranschaulicht, in dem Abwärme von einer Vorrichtung zur Pasteurisierung oder Sterilisation eines Lebensmittels wiedergewonnen wird.

Es wird ein verbessertes Energiemanagement in einer Anlage zur Herstellung von Lebensmitteln auf Pflanzenbasis (wie Getränke aus Getreide, Nüssen und Hülsenfrüchte, Pflanzenmilch, beispielsweise Hafermilch, Dinkelmilch, Reismilch, Sojamilch, Mandelmilch, Kokosmilch, Erdnussmilch, Haselnussmilch, etc.) bereitgestellt. Das verbesserte Energiemanagement umfasst die Rückgewinnung von Wärme- beziehungsweise Kälteenergie. Weiterhin wird ein zentraler Energiespeichertank in der Anlage bereitgestellt, um wiedergewonnene Energie zwischenzuspeichern.

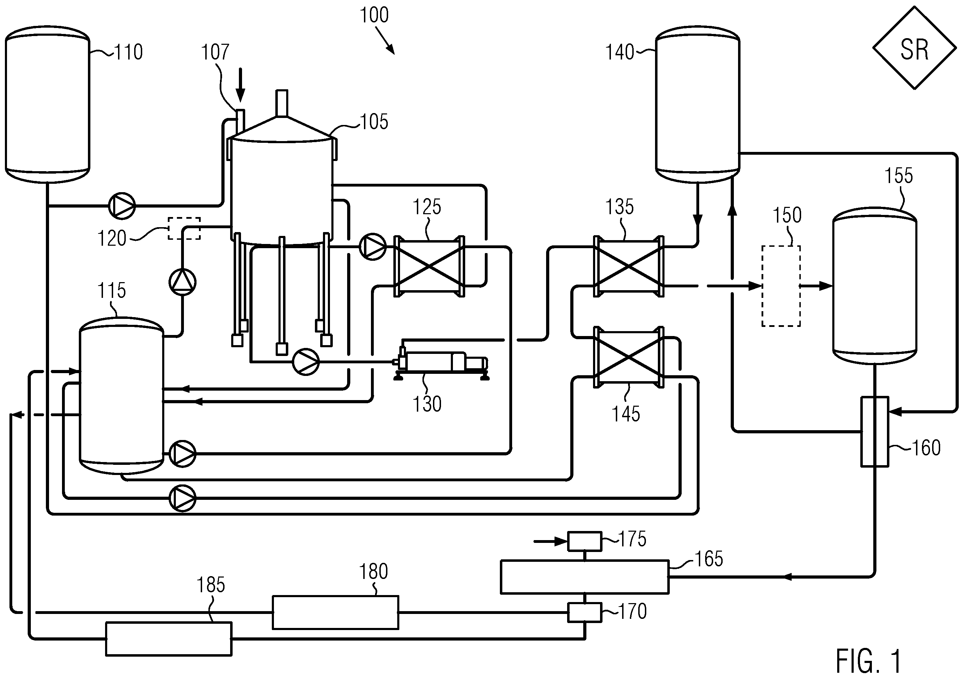

Eine erfindungsgemäße Anlage 100 zur Herstellung von Lebensmitteln auf Pflanzenbasis ist in Figur 1 veranschaulicht. Die Anlage 100 umfasst ein zentrales Maischegefäß 105 in Form eines beheizbaren Rührbehälters. An einem Deckelbereich (der sogenannten Behälterhaube) des Maischegefäßes 105 ist eine Vormaischeinrichtung 107 angeschlossen. Die Vormaischeinrichtung 107 kann sich alternativ auch im oberen Bereich der Behälterwand (mit Behälterwand versteht man die Behälterzarge) befinden. Der Vormaischeinrichtung 107 werden Wasser, beispielsweise vorgewärmtes Wasser, und ein stärkehaltiges Pflanzensubstrat zugeführt. Die Vormaischeinrichtung 107 kann Drallbleche zur Turbulenzerhöhung und somit effizienten Vermischung von Wasser und Pflanzensubstrat umfassen.

Das in die Vormaischeinrichtung 107 eingeleitete Wasser kann hierbei eine Temperatur oberhalb der Verkleisterungstemperatur der Stärke des stärkehaltigen Pflanzensubstrats aufweisen. Dieses der Vormaischeinrichtung 107 zugeführte Wasser kann aus einem Warmwassertank 110 stammen, der beispielsweise Warmwasser im Bereich von 70°C und 90 °C speichert. Auch ist eine mehrstufige Erhitzung des in die Vormaischeinrichtung 107 eingeleiteten Wassers denkbar. Auch wenn nicht dargestellt so kann sich vor der Vormaischeinrichtung 107 ein Wassermischer befinden, welcher mit der Vormaischeinrichtung 107, dem Warmwassertank 110 und einer Kaltwasserquelle (zum Beispiel dem Kaltwassertank 140) dahingehend verbunden ist, dass Wasser mit einer gewünschten Temperatur ausgemischt und der Vormaischeinrichtung 107 zugeführt werden kann.

Das Wasser und das stärkehaltige Pflanzensubstrat werden in der Vormaischeinrichtung 107 zu einer stärkehalten Suspension (Maische) gemischt. Die Feststoffkonzentration des stärkehaltigen Pflanzensubstrats in der Suspension kann hierbei zwischen 15 % und 40 %, insbesondere zwischen 20 % oder 25 % und 35 %, liegen.

Die Maische wird für einen rezeptabhängigen Zeitraum bei durchlaufen eines rezeptabhängigen Temperaturprofiles unter Einhaltung von Rasten bei bestimmten Temperaturen und Rühren beziehungsweise ständiger Durchmischung in dem Maischegefäß 105 gehalten. Der Maischeprozess kann beispielsweise bei einer Temperatur zwischen 50°C und 100°C ausgeführt werden. Typische Verweilzeiten der Maische in dem Maischegefäß 105 betragen zwischen 0,5 und 4 Stunden. Die Aufheizung kann beispielsweise über eine Zargen- und/oder Bodenheizfläche erfolgen. So kann in einem Teilbereich der Zarge des Maischegefäßes 105 im Innenraum des Maischegefäßes 105 und/oder in einem Teilbereich des (beispielsweise konusförmigen) Bodens des Maischegefäßes 105 jeweils eine Heizfläche im Innenraum des Maischegefäßes 105 angebracht sein. Der Heizfläche bzw. den Heizflächen werden über Leitungen ein Wärmemedium, wie etwa Heizwasser (aus dem Energiespeichertank 115) oder heißer Wasserdampf, zugeführt, so dass sie als Heizeinrichtungen fungieren können. Sowohl die Zargenheizfläche als auch die Bodenheizfläche kann mit dem gleichen Wärmemedium versorgt werden. Es ist jedoch auch möglich, dass beispielsweise die Zargenheizfläche (oder Bodenheizfläche) mit Heizwasser (aus dem Energiespeichertank 115) und die Bodenheizfläche (oder Zargenheizfläche) mit heißem Wasserdampf versorgt wird. Besonders vorteilhaft ist, wenn die Zargen- und/oder Bodenheizfläche als sogenannte Pillow Plates Heizfläche (mit zum Produkt gerichteten Unebenheiten) ausgeführt ist. Die Pillow Plates Heizfläche verfügt über einen hohen Wärmeübergangskoeffizienten. Alternativ oder zusätzlich kann das Maischegefäß 105 andere Arten von Wandheizungen, Wärmetauschern oder Rohrwendelheizungen umfassen, oder es können außerhalb des Maischegefäßes 105 Wärmetauscher zum Aufheizen der Maische vorgesehen sein. Zusätzlich zur Verwendung von Wärmetauschern kann die Maische auch mit Direktdampf aufgeheizt werden (d.h. Dampf wird direkt in das mit Maische befüllte Maischegefäß 105 gespritzt).

Das Heizwasser zur Aufheizung der Maische in dem Maischegefäß 105 stammt zumindest teilweise aus dem Energiespeichertank 115. Gegebenenfalls wird dieses aus dem Energiespeichertank 115 gelieferte Heizwasser noch von einer Nachheizeinrichtung 120 weiter aufgeheizt bevor es dem Maischegefäß 105 zur Aufheizung der Maische bereitgestellt wird. Durch Vorsehen einer solchen Nachheizeinrichtung 120 kann das maximale Temperaturniveau, das im Energiespeichertank 115 vorzuhalten ist, gesenkt werden beziehungsweise kann der zentrale Energiespeichertank 115 kleiner dimensioniert werden. Der zentrale Energiespeichertank 115 kann als Schichtenspeichertank vorgesehen werden, der in verschiedenen Teilbereichen Waser/Wärme mit verschiedenen Temperaturniveaus speichert. Die Temperaturniveaus können beispielsweise zwischen 60°C und 110°C liegen. Auch können mehr als ein zentraler Energiespeichertank 115, beispielsweise ein Hochtemperatur-Schichtenspeichertank und ein Niedertemperatur-Schichtenspeichertank, vorgesehen sein. Auch wenn in Figur 1 nicht dargestellt, so kann von der Nachheizeinrichtung 120 eine Bypassleitung zurück zum Energiespeichertank 115 führen. Dadurch kann, wenn im Energiespeichertank 115 zu wenig Wärme, beispielhaft zu Beginn der Produktionswoche, vorhanden ist, der Energiespeichertank 115 im Kreislauf erwärmt werden. Wenn mehrere Energiespeichertanks vorhanden sind, dann kann die Nachheizeinrichtung mit allen Energiespeichertanks verbunden sein, oder es können mehrere Nachheizeinrichtungen vorgesehen sein, welche jeweils mit einem oder bestimmten Energiespeichertanks verbunden sind. Alternativ oder zusätzlich kann der Energiespeichertank über eine eigene Nachheizeinrichtung verfügen, das heißt die Nachheizeinrichtung ist lediglich mit dem Energiespeichertank im Kreislauf verbunden und kann so im Bedarfsfall den Energiespeichertank erwärmen.

Das in Figur 1 gezeigte Maischegefäß 105 umfasst weiterhin ein Rührwerk, durch dessen Betrieb der Produktinhalt des beheizbaren Maischegefäßes 105 homogen gehalten werden kann. Durch das Rührwerk wird die Suspension in axialer Richtung im Wesentlichen parallel zu der Behälterzarge und in radialer Richtung im Wesentlichen senkrecht zu der Behälterzarge bewegt. Die axiale Bewegungskomponente verhindert dabei das Absetzen der Suspension am Behälterboden, und die radiale Bewegungskomponente erzeugt eine Strömung entlang der Wärmetauscherfläche (welche als Pillow-Plates Heizfläche ausgeprägt sein kann) an der Behälterzarge, wodurch die Wärmeübertragung erhöht wird. Alternativ zu einem Rührwerk kann auch eine Umpumpvorrichtung vorhanden sein, welche die Maische, beispielhaft über eine Pumpe, aus dem Maischegefäß 105 abzieht und wieder zuführt und so die Maische homogen hält.

Es sei erwähnt, dass die Anlage 100 mehr als ein Maischegefäß 105 umfassen kann. Dies kann insbesondere dann vorteilhaft sein, wenn der Maischeprozess (insbesondere eine enzymatische Hydrolyse) in mehreren Stufen bei unterschiedlichen Temperaturen ablaufen soll.

Die zur Herstellung des Lebensmittels auf Pflanzenbasis (zum Beispiel Milchersatzprodukts) erforderliche enzymatische Hydrolyse erfolgt unter Zugabe eines Enzyms zu der Maische (durch eine entsprechende in Figur 1 nicht gezeigte Zuleitung in das Maischegefäß 105). Das Enzym wird passend zu dem stärkehaltigen Pflanzensubstrat ausgewählt. Beispiele für geeignete Enzyme umfassen α-Amylase, β-Amylase, Glukosidase, und Pullulanase. Das Einleiten der Suspension aus der Vormaischeinrichtung 107 in das Maischegefäß 105 kann nach dem Einleiten des Enzyms oder während des Einleitens des Enzyms in den in das Maischegefäß 105 erfolgen.

Nach erfolgter enzymatischer Hydrolyse kann das Produkt das Maischegefäß 105 über einen beziehungsweise mehrere im Bodenbereich vorgesehenen Auslässe verlassen. Beispielsweise kann das Produkt nach erfolgter Verkleisterung, Verflüssigung und enzymatischer Hydrolyse durch α-Amylase von dem Maischegefäß 105 an einen Wärmetauscher 125 (einem sogenannten Maischekühler) geliefert werden, in dem es abgekühlt wird. Das zur Abkühlung benötigte Wasser stammt aus dem Energiespeichertank 115 (etwa aus einem Teilbereich mittleren Temperaturniveaus desselben). Das so abgekühlte Produkt wird dem Maischegefäß 105 wieder zugeleitet und einer weiteren enzymatischen Hydrolyse durch β-Amylase (Verzuckerung) unterzogen. Auch wenn in Figur 1 nicht dargestellt so kann das abgekühlte Produkt in einer Ausführungsform nicht wieder in das selbe Maischegefäß 115 zurückgeführt werden, sondern einem weiteren Maischegefäß zugeführt werden.

Nach Abschluss sämtlicher vorgesehener enzymatischer Hydrolyseprozesse wird das Produkt von dem Maischegefäß 105 an eine Fest-Flüssig-Trenneinrichtung 130, beispielsweise einen Dekanter oder Maischefilter, geliefert. Das durch die Fest-Flüssig-Trenneinrichtung 130 erhaltene flüssige Produkt wird an einen Wärmetauscher 135 geliefert, in dem es abgekühlt wird. Das zur Abkühlung benötigte Wasser wird von einem Kaltwassertank 140 geliefert und kann nach Erwärmung einem oberen Bereich des Kaltwassertanks wieder zugeführt werden. Der Kaltwassertank 140 kann über Kühlflächen verfügen und/oder der Inhalt des Kaltwassertanks 140 kann mittels eines externen Wärmetauschers, über den der Tankinhalt zirkuliert, gekühlt werden. Über einen weiteren Wärmetauscher 145 kann Wärme zwischen dem in dem Wärmetauscher 135 erwärmten vom Kaltwassertank 140 stammenden Wasser (mit einer Temperatur beispielsweise im Bereich von 5 °C und 30 °C) und vom Energiespeichertank 115 stammenden Wasser ausgetauscht werden. Das so weiter aufgeheizte vom Kaltwassertank 140 stammenden Wasser kann dann bevorzugt dem Warmwassertank 110 zur Zwischenspeicherung zugeführt werden.

Das in dem Wärmetauscher 135 abgekühlte Produkt wird einem oder mehreren Tanks (Mischtanks) 155 zugeführt, in denen es mit verschiedenen Zutaten, wie etwa Kalzium, Salz, Proteine, Zucker, Öl, Gewürzen, Aromen, Stabilisierungsmitteln, und/oder Wasser rezeptabhängig zum fertigen Lebensmittelprodukt ausgemischt wird. Auch diese Mischtanks 155 können Rührwerke aufweisen. Zutaten können dem flüssigen Produkt auch auf dem Weg zu dem einen oder den mehreren Mischtanks 155 zugefügt werden. Beispielsweise kann das flüssige Produkt vollständig mit Zutaten gemischt werden, bevor es als fertiges Lebensmittelprodukt dem dann lediglich als Puffertank dienenden einen oder mehreren Tanks 155 zugeführt wird. Weiterhin kann das flüssige Produkt auch nach Verlassen des Wärmetauschers 135, beispielsweise kurz vor Eintritt in den einen oder die mehreren Mischtanks 155 oder in dem einen oder den mehreren Mischtanks 155, durch eine Kühleinrichtung 150, die beispielsweise mit Glykol als Kälteträger, mit primärer Energie oder, beispielsweise über eine Wärmepumpe, rückgewonnener Wärmeenergie, betrieben wird, abgekühlt werden, um, wenn gefordert, eine niedrige Produkttemperatur zu erlangen, um so die Produktqualität zu erhalten. Unabhängig davon, ob eine Kühleinrichtung 150 vorhanden ist, kann der Mischtank beziehungsweise können die Mischtanks auch über eine Kühleinrichtung, wie etwa eine Boden- und/oder Zargenkühlfläche verfügen. Die Kühleinrichtung 150 kann sich auch unmittelbar an den Wärmetauscher 135 anschließen.

Bevor das so in dem einen oder in den mehreren Mischtanks 155 fertiggestellte Lebensmittelprodukt abgefüllt wird, wird es einer Pasteurisierung oder Sterilisation unterzogen. Hierzu wird es zunächst aus dem einen oder den mehreren Mischtanks 155 ausgeleitet. Da es typischerweise bei relativ niedrigen Temperaturen in dem einen oder den mehreren Mischtanks 155 zwischengelagert wurde, kann es wünschenswert sein, die Kälteenergie des Produkts vor der Pasteurisierung oder Sterilisation zu einem gewissen Teil zu erhalten, also zurückzugewinnen. In einem entsprechenden Wärmetauscher 160 oder einer ähnlichen Einrichtung kann Wasser mithilfe des aus dem einen oder den mehreren Mischtanks 155 stammenden Lebensmittelprodukt abgekühlt und beispielsweise dem Kaltwassertank 140 zugeführt werden. Zumindest ein Teil des durch das aus dem einen oder den mehreren Mischtanks 155 stammenden Lebensmittelprodukt abgekühlten Wassers kann auch direkt zum Abkühlen des von der Fest-Flüssig-Trenneinrichtung 130 gelieferten flüssigen Produkts Verwendung finden. In einer weiteren Ausführungsform wird das von der Fest-Flüssig-Trenneinrichtung 130 gelieferte flüssige Produkt zumindest teilweise im Gegenstrom mithilfe des von dem einen oder den mehreren Mischtanks 155 stammenden Lebensmittelprodukts abgekühlt. Hierdurch verringert sich die zum Nachkühlen des von der Fest-Flüssig-Trenneinrichtung 130 gelieferten flüssigen Produkts benötigte (Primär)Energie. Hierbei ist zu bedenken, dass typischer Weise umso länger die Zeitdauer der Speicherung des Produkts in dem einen oder den mehreren Mischtanks 155 ist desto niedriger die Lagertemperatur gewählt wird. Umso niedriger die Lagertemperatur ist desto mehr lohnt sich die Kälterückgewinnung aus dem Produkt. Andere rekuperative Quellen für Kälte, die beispielsweise in dem Kaltwassertank 140 zwischengespeichert werden kann, sind beispielhaft Wärmepumpen, welche gegebenenfalls in der Anlage Verwendung finden. Die Wärme, welche aus der Wärmepumpe entsteht, wird dem Energiespeichertank oder alternativ dem Warmwassertank zugeführt. Eine weitere Möglichkeit ist der Einsatz von einer Kraftwärmekopplung beispielsweise eines Blockheizkraftwerkes.

Das von dem einen oder den mehreren Mischtanks 155 stammenden Produkt wird an eine Vorrichtung zur Pasteurisierung oder Sterilisation 165 geliefert. Abwärme dieser Vorrichtung zur Pasteurisierung oder Sterilisation 165 kann über eine Abwärmerückgewinnungseinrichtung 170, die einen weiteren Wärmetauscher umfassen kann, gewonnen und in dem Energiespeichertank 115 und/oder dem Warmwassertank 110 zur weiteren Verwendung zwischengespeichert werden.

Die Vorrichtung zur Pasteurisierung oder Sterilisation 165 kann eine Ultrahocherhitzungsvorrichtung sein, die dazu ausgebildet ist, das zu sterilisierende Produkt direkt mithilfe von Dampf zu erhitzen, wodurch zur schonenden Behandlung des Produkts hohe Erhitzungsraten und Abkühlraten erzielt werden können. Beispielsweise kann so ein zu pasteurisierendes Produkt innerhalb einer Sekunde von einer Temperatur von 80 °C auf eine Temperatur von 140 °C erhitzt werden.

Die Vorrichtung zur Pasteurisierung oder Sterilisation 165 kann dazu ausgebildet sein, ein Dampf-Infusionsverfahren oder ein Dampf-Injektionsverfahren auszuführen. Beim Dampf-Infusionsverfahren wird das zu behandelnde Produkt über eine Düse fein verteilt in einen unter Dampfdruck stehenden Behälter eingebracht, während beim Dampf-Injektionsverfahrender Dampf direkt über eine Injektionsdüse in das Produkt eingebracht wird. In beiden Fällen umfasst die Vorrichtung zur Pasteurisierung oder Sterilisation 165 einen Flash-Kühler, um den bei der Erhitzung im Produkt verbleibenden/kondensierten Dampf wieder aus dem Produkt abzuziehen. Hierzu wird das Produkt nach der Erhitzung in einen unter Unterdruck stehenden Behälter eingeleitet, in dem der Dampf ausgetrieben wird (Flash-Verdampfung). Der so abgezogene Dampf wird in einem Wärmetauscher kondensiert. In diesem Fall umfasst die Abwärme der Ultrahocherhitzungsvorrichtung die Kondensationswärme des Dampfes und die Wärme des Kondensats. Die Wärme des Kondensates aus der Kondensation kann im Energiespeichertank gepuffert werden. Hierdurch können aufgrund der Ausprägung des Energiespeichertanks mit einer Nachheizeinrichtung niedrigere Temperaturniveaus von beispielsweise 60 - 80 °C gespeichert werden. Der für das Dampf-Infusionsverfahren oder Dampf-Injektionsverfahren benötigte Dampf wird durch eine Dampferzeugungseinrichtung 175 bereitgestellt. Wasser, das an die Dampferzeugungseinrichtung 175 zur Dampfererzeugung geliefert wird, kann mithilfe von aus dem Energiespeichertank 115 gelieferter Wärme beispielsweise über einen entsprechenden weiteren Wärmetauscher vorgeheizt werden.

In einer alternativen Ausführungsform wird das von der Fest-Flüssig-Trenneinrichtung 130 gelieferte Produkt nicht in einen oder mehreren Mischtanks 155 zwischengespeichert, sondern es wird direkt der Vorrichtung zur Pasteurisierung oder Sterilisation 165 zugeführt, wobei es geeignet auf dem Weg zu der Vorrichtung zur Pasteurisierung oder Sterilisation 165 mit Zutaten und gegebenenfalls Wasser versetzt wird. Das durch die Vorrichtung zur Pasteurisierung oder Sterilisation 165 zu behandelnde Produkt kann gemäß verschiedener Ausführungsform mit einer Temperatur zwischen beispielsweise 4 °C und 60 °C dieser Vorrichtung zur Pasteurisierung oder Sterilisation 165 zugeleitet werden.

Das durch die Vorrichtung zur Pasteurisierung oder Sterilisation 165 behandelte Produkt kann dann, gegebenenfalls nach Zwischenspeicherung in einem Aseptik-Tank, zur Abfüllung gelangen.

Insbesondere liefert die Vorrichtung zur Pasteurisierung oder Sterilisation 165 in Form der Ultrahocherhitzungsvorrichtung relativ heiße Abwärme, die in dem Energiespeichertank 115 zwischengespeichert werden kann, wobei optional ein Booster (beispielsweise in Form eines Wärmetauschers oder Dampferhitzers) 185 zu weiteren Aufheizung des von der Ultrahocherhitzungsvorrichtung gelieferten relativ heißen Abwärmestroms eingesetzt werden kann. Andererseits kann der Kondensator der Ultrahocherhitzungsvorrichtung zur Kondensation des aus dem Produkt abgezogenen Dampfes mit einem rückgekühlten heißen Abwärmestrom betrieben werden, der aus dem Energiespeichertank 115 stammt und gegebenenfalls durch einen optionale Kühler 180 vor der Nutzung durch den Kondensator auf eine geeignete Temperatur abgekühlt wird.

Generell kann eine Kühlung eines in der Anlage 100 genutzten Kälteträgers (beispielsweise Glykols) mithilfe einer Wärmepumpe erfolgen. Beispielsweise kann so eine rekuperative Kühlung für eine Tankkühlung des einen oder der mehreren Mischtanks 155, der Kühleinrichtung 150 oder einer möglicherweise vorgesehenen Tankkühlung des Kaltwassertanks 140 oder auch der Vorrichtung zur Pasteurisierung oder Sterilisation 165 erreicht werden.

Andererseits kann auch durch eine in der Anlage verwendeten Wärmepumpe eine rekuperative Verwendung von Abwärme erfolgen. So kann beispielsweise Abwärme von Kompressoren oder einer Kälteanlage durch eine Wärmepumpe auf ein Niveau gepumpt werden, welches zur Beheizung des Energiespeichertanks 115, des Maischegefäßes 105 und/oder der Vorrichtung zur Pasteurisierung oder Sterilisation 165, beispielsweise Kurzzeiterhitzungsvorrichtung oder Ultrahocherhitzungsvorrichtung, genutzt werden kann.

Beispielsweise kann die Wärmepumpe mit dem Kaltwassertank 140 und dem Energiespeichertank 115 derart verbunden sein, dass der Inhalt des Kaltwassertanks 140 gekühlt und derjenige des Energiespeichertanks 115 erwärmt wird.

Gemäß einer Ausführungsform wird erhitztes Kühlwasser vom Kondensator einer als Vorrichtung zur Pasteurisierung oder Sterilisation 165 dienenden Ultrahocherhitzungsvorrichtung als Wärmequelle für eine Wärmepumpe verwendet. So kann das, beispielsweise auf 75 °C, erhitzte Kühlwasser zumindest vorgekühlt werden. Als Wärmesenke kann beispielsweise der Energiespeichertank 115 dienen.

Beispielsweise kann aus einem unteren Teilbereich des Energiespeichertanks 115 Wasser abgezogen werden, von der Wärmepumpe, beispielsweise auf 100 °C, erhitzt werden und in einen oberen Bereich des Energiespeichertanks 115 zurückgeführt werden. Auch kann gemäß einer weiteren Ausführungsform der optionale Kühler 180 als Wärmequelle für eine Wärmepumpe und der optionale Booster 185 als Wärmesenke dienen.

Gemäß einer weiteren Ausführungsform kann auch dem Energiespeichertank 115 zugeführtes Heißwasser/Heizwasser, das beispielsweise von der Vorrichtung zur Pasteurisierung oder Sterilisation 165 rückgewonnene Wärme aufweist, durch eine entsprechende Heizeinrichtung zusätzlich geheizt werden, um ein höheres Temperaturniveau zu erreichen ohne Lastspitzen zu erzeugen. Die von der Vorrichtung zur Pasteurisierung oder Sterilisation 165 rückgewonnene Wärme kann auch zur externen weiteren Aufheizung von Heizwasser aus dem Energiespeichertank 115 dienen, das für die Beheizung des Maischegefäßes 105 verwendet wird. Auch kann die von der Vorrichtung zur Pasteurisierung oder Sterilisation 165 rückgewonnene Wärme als Wärmequelle für eine gegebenenfalls in der Anlage 100 installierten Wärmepumpe und/oder für den Betrieb der Nachheizeinrichtung 120 verwendet werden. Weiterhin kann auch Abwärme anderer Quellen, wie etwa eine Abfülleinrichtung (beispielsweise eine Streckblasmaschine, Waschmaschine oder Füller), Kompressoren oder einer Kraftwärmekopplung (zum Beispiel eines Blockheizkraftwerk), oder einer Solarthermieanlage in dem Energiespeichertank 115 und/oder dem Warmwasserspeichertank 110 zwischengespeichert werden.

Es wird explizit festgestellt, dass in erfindungsgemäße Ausführungsformen nicht sämtliche in Figur 1 gezeigten Komponenten, insbesondere solche, die der Wiedergewinnung von Energie dienen, vorhanden sein müssen, wenn auch eine Kombination dieser Komponenten sich als vorteilhaft herausstellen kann. Beispielsweise umfasst die Anlage 100 gemäß Ausführungsform zumindest eine der folgenden Komponenten nicht: die Kühleinrichtung 150, den (die) Mischtank(s) 155, den Wärmetauscher 160, und die Abwärmerückgewinnungseinrichtung 170.

Einzelne Prozessschritte, die innerhalb der Anlage 100 ausgeführt werden, können über eine Steuerungs-/Regeleinrichtung SR gesteuert/geregelt werden, die insbesondere auch dazu geeignet sein kann, Verfahrensschritte von Ausführungsformen erfindungsgemäßer Verfahren, wie sie im Weiteren beschrieben werden, und gegebenenfalls weitere Schritte, auszuführen beziehungsweise zu steuern und/oder regeln.

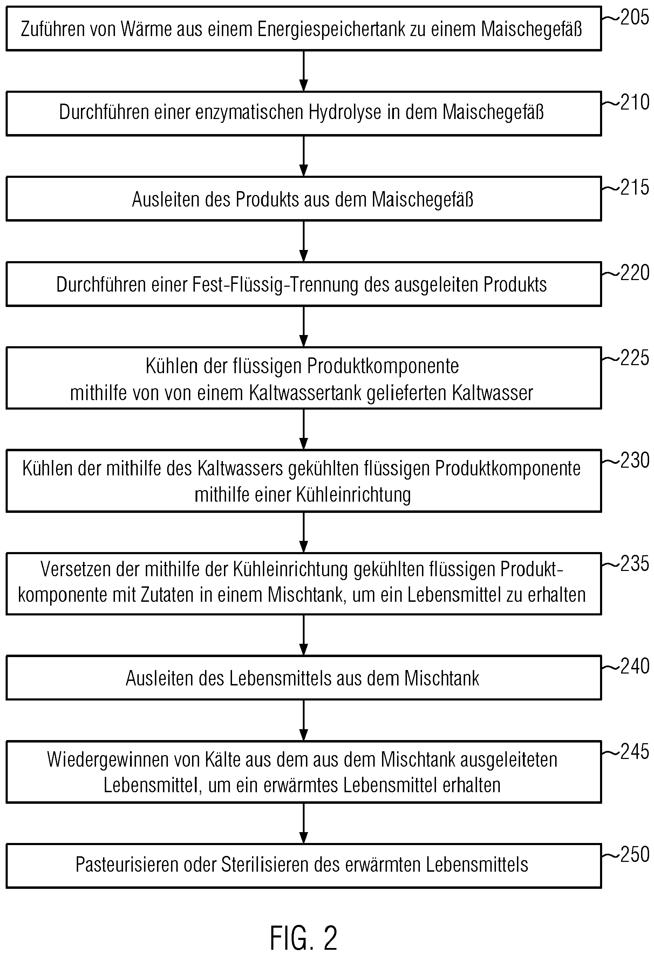

Eine Ausführungsform des erfindungsgemäßen Verfahrens zur Herstellung eines Lebensmittelprodukts auf Pflanzenbasis, beispielsweise mithilfe der in Figur 1 gezeigten Anlage 100, ist in dem Flussdiagramm der Figur 2 veranschaulicht. In Schritt 205 wird aus einem Energiespeichertank Wärme an ein Maischegefäß geliefert. Die Wärme wird in Form von Heizwasser, beispielsweise mit einer Temperatur von 90 °C bis 110 °C, geliefert, das außerhalb des Energiespeichertanks weiter aufgeheizt werden kann, bevor es zum Beheizen des Maischegefäßes Verwendung findet. Der Energiespeichertank kann ein Mehrschichtenspeichertank sein, der in verschiedenen Bereichen Wasser verschiedener Temperaturniveaus speichert. In dem Maischegefäß findet unter Einhaltung definierten Temperaturen eine enzymatische Hydrolyse 210 einer Suspension aus Wasser und einem Pflanzensubstrat, beispielsweise einem Hafermehl, statt.

Nach Abschluss der enzymatischen Hydrolyse 210 wird das entstandene Produkt aus dem Maischegefäß ausgeleitet 215. Beispielsweise kann es nach einer Abkühlung auf eine bestimmte Temperatur mithilfe von Wasser aus dem Energiespeichertank dem Maischegefäß wieder zugeführt werden (oder einem anderen Maischegefäß zugeführt werden), und es kann eine weitere enzymatische Hydrolyse mit einem anderen Enzym als zuvor verwendet durchgeführt werden. Auch kann die enzymatische Hydrolyse 210 eine enzymatische Hydrolyse sein, die einer bereits vorhergegangen folgt. Gemäß der in Figur 2 gezeigten Ausführungsform wird das ausgeleitete Produkt, das eine Temperatur von beispielsweise 80 °C oder 85 °C aufweisen kann, einer Fest-Flüssig-Trennung 220 unterzogen. Die dabei erhaltene flüssige Produktkomponente, aus der Feststoffanteile des Produkts abgezogen wurden und die beispielsweise eine Temperatur von 60°C aufweist, wird mithilfe von von einem Kaltwassertank gelieferten Kaltwasser, das beispielsweise eine Temperatur von 15°C aufweist, in einem Wärmetauscher gekühlt 225.

Die Kühlung der flüssigen Produktkomponente kann zusätzlich oder alternativ mithilfe von aus dem Energiespeichertank 115 gelieferten Wasser erfolgen. Das erwärmte Kaltwasser (mit beispielsweise 55 °C) kann in einem weiteren Wärmetauscher mithilfe von Heizwasser aus dem Energiespeichertank weiter erwärmt werden (beispielhaft auf 80 °C) und dann dem Warmwasserspeichertank zugeleitet werden. Das in dem weiteren Wärmetauscher abgekühlte Heizwasser aus dem Energiespeichertank kann diesem als etwas kälteres Warmwasser wieder zugeleitet werden oder ebenfalls dem Warmwasserspeichertank zugeleitet werden.

Die mithilfe des Kaltwassers aus dem Kaltwassertank gekühlte flüssige Produktkomponente wird mithilfe einer Kühleinrichtung, die mit Primärenergie betrieben sein kann, weiter auf eine Lagertemperatur, beispielsweise von 5 °C, abgekühlt 230. In einem Mischtank wird die so gekühlte flüssige Produktkomponente mit Zutaten, wie etwa Kalzium, Salz, Proteine, Zucker, Öl, Gewürze, Aromen, Stabilisierungsmittel, etc., und/oder Wasser versetzt 235, um ein Lebensmittelprodukt, beispielsweise Hafermilch, Sojamilch oder Mandelmilch, zu erhalten.

Das Lebensmittelprodukt wird aus dem Mischtank ausgeleitet 240, und Kälte wird aus dem aus dem Mischtank ausgeleiteten Lebensmittelprodukt wiedergewonnen 245. Dieses geschieht beispielsweise durch Kühlen von von dem Kaltwassertank stammenden Kaltwasser in einem weiteren Wärmetauscher. Das so erwärmte Lebensmittelprodukt wird pasteurisiert oder sterilisiert 250 und kann schließlich abgefüllt werden.

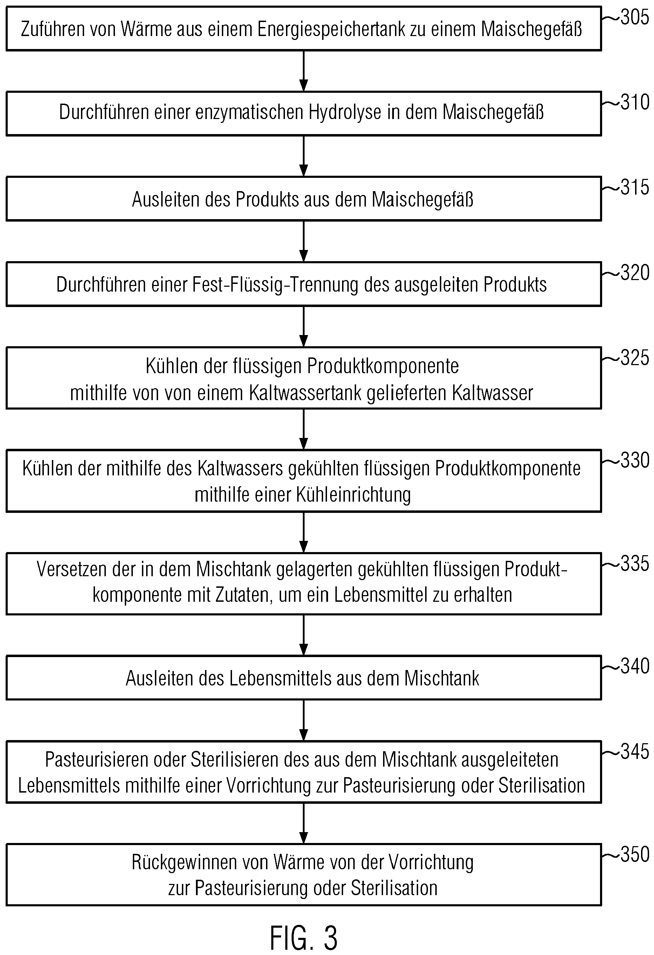

Eine andere Ausführungsform des erfindungsgemäßen Verfahrens zur Herstellung eines Lebensmittelprodukts auf Pflanzenbasis, beispielsweise mithilfe der in Figur 1 gezeigten Anlage 100, ist in dem Flussdiagramm der Figur 3 veranschaulicht. In Schritt 305 wird aus einem Energiespeichertank Wärme an ein Maischegefäß geliefert. Die Wärme wird in Form von Heizwasser, beispielsweise mit einer Temperatur von 90 °C bis 110 °C, geliefert, das außerhalb des Energiespeichertanks weiter aufgeheizt werden kann, bevor es zum Beheizen des Maischegefäßes Verwendung findet. Der Energiespeichertank kann ein Mehrschichtenspeichertank sein, der in verschiedenen Bereichen Wasser verschiedener Temperaturniveaus speichert. In dem Maischegefäß findet unter Einhaltung definierten Temperaturen eine enzymatische Hydrolyse 310 einer Suspension aus Wasser und einem Pflanzensubstrat, beispielsweise einem Hafermehl, statt.

Nach Abschluss der enzymatischen Hydrolyse 310 wird das entstandene Produkt aus dem Maischegefäß ausgeleitet 315. Beispielsweise kann es nach einer Abkühlung auf eine bestimmte Temperatur mithilfe von Wasser aus dem Energiespeichertank dem Maischegefäß wieder zugeführt werden (oder einem anderen Maischegefäß zugeführt werden), und es kann eine weitere enzymatische Hydrolyse mit einem anderen Enzym als zuvor verwendet durchgeführt werden. Auch kann die enzymatische Hydrolyse 310 eine enzymatische Hydrolyse sein, die einer bereits vorhergegangen folgt. Gemäß der in Figur 2 gezeigten Ausführungsform wird das ausgeleitete Produkt, das eine Temperatur von beispielsweise 80 °C oder 85 °C aufweisen kann, einer Fest-Flüssig-Trennung 320 unterzogen. Die dabei erhaltene flüssige Produktkomponente, aus der Feststoffanteile des Produkts abgezogen wurden und die beispielsweise eine Temperatur von 60 °C aufweist, wird mithilfe von von einem Kaltwassertank gelieferten Kaltwasser, das beispielsweise eine Temperatur von 15 °C aufweist, in einem Wärmetauscher gekühlt 325. Die Kühlung der flüssigen Produktkomponente kann zusätzlich oder alternativ mithilfe von aus dem Energiespeichertank 115 gelieferten Wasser erfolgen. Das (beispielsweise auf eine Temperatur von 55 °C) erwärmte Kaltwasser kann in einem weiteren Wärmetauscher mithilfe von Heizwasser aus dem Energiespeichertank weiter erwärmt werden (beispielhaft auf 80 °C) und dann dem Warmwasserspeichertank zugeleitet werden. Das in dem weiteren Wärmetauscher abgekühlte Heizwasser aus dem Energiespeichertank kann diesem als etwas kälteres Warmwasser wieder zugeleitet werden oder ebenfalls dem Warmwasserspeichertank zugeleitet werden.

Die mithilfe des Kaltwassers aus dem Kaltwassertank gekühlte flüssige Produktkomponente wird mithilfe einer Kühleinrichtung, die mit Primärenergie betrieben sein kann, weiter auf eine Lagertemperatur, beispielsweise von 5 °C, abgekühlt 330. In einem Mischtank wird die so gekühlte flüssige Produktkomponente mit Zutaten, wie etwa Kalzium, Salz, Proteine, Zucker, Öl, Gewürze, Aromen, Stabilisierungsmittel, etc., versetzt 335, um ein Lebensmittelprodukt, beispielsweise Hafermilch, Sojamilch oder Mandelmilch, zu erhalten.

Das Lebensmittelprodukt wird aus dem Mischtank ausgeleitet 340. Das aus dem Mischtank ausgeleitet 340 ausgeleitete Lebensmittelprodukt wird einer Vorrichtung zur Pasteurisierung oder Sterilisation zugeleitet, in der es pasteurisiert oder sterilisiert wird 345. Die bei der Pasteurisierung oder Sterilisation anfallende Abwärme der Vorrichtung zur Pasteurisierung oder Sterilisation wird wiedergewonnen 350, beispielsweise durch Erwärmen von Wasser, und beispielsweise dem Energiespeichertank und/oder dem Warmwasserspeichertank zur Zwischenspeicherung zugeführt.

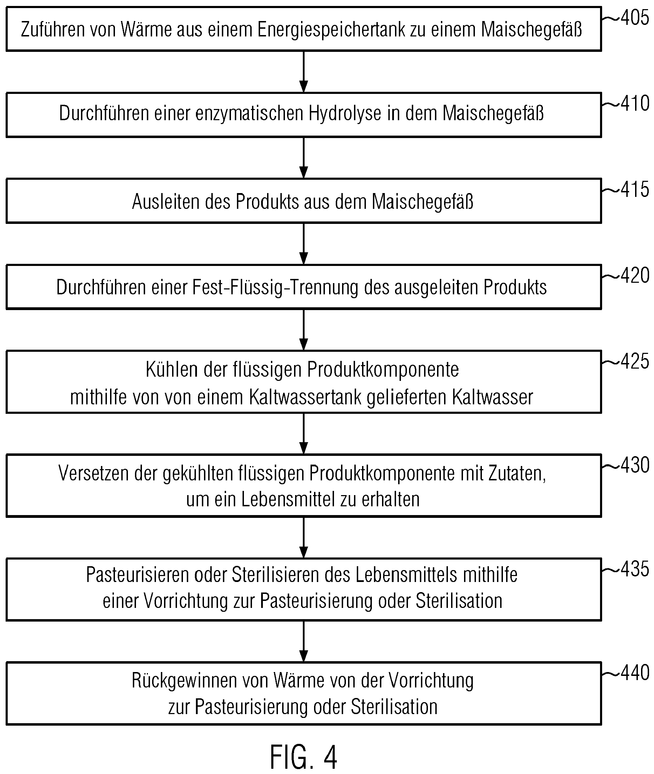

Eine weitere Ausführungsform des erfindungsgemäßen Verfahrens zur Herstellung eines Lebensmittelprodukts auf Pflanzenbasis, beispielsweise mithilfe der in Figur 1 gezeigten Anlage 100, ist in dem Flussdiagramm der Figur 4 veranschaulicht. In Schritt 405 wird aus einem Energiespeichertank Wärme an ein Maischegefäß geliefert. Die Wärme wird in Form von Heizwasser, beispielsweise mit einer Temperatur von 90 °C bis 110 °C, geliefert, das außerhalb des Energiespeichertanks weiter aufgeheizt werden kann, bevor es zum Beheizen des Maischegefäßes Verwendung findet. Der Energiespeichertank kann ein Mehrschichtenspeichertank sein, der in verschiedenen Bereichen Wasser verschiedener Temperaturniveaus speichert. In dem Maischegefäß findet unter Einhaltung definierten Temperaturen eine enzymatische Hydrolyse 410 einer Suspension aus Wasser und einem Pflanzensubstrat, beispielsweise einem Hafermehl, statt.

Nach Abschluss der enzymatischen Hydrolyse 410 wird das entstandene Produkt aus dem Maischegefäß ausgeleitet 415. Beispielsweise kann es nach einer Abkühlung auf eine bestimmte Temperatur mithilfe von Wasser aus dem Energiespeichertank dem Maischegefäß wieder zugeführt werden (oder einem anderen Maischegefäß zugeführt werden), und es kann eine weitere enzymatische Hydrolyse mit einem anderen Enzym als zuvor verwendet durchgeführt werden. Auch kann die enzymatische Hydrolyse 410 eine enzymatische Hydrolyse sein, die einer bereits vorhergegangen folgt. Gemäß der in Figur 2 und Figur 3 gezeigten Ausführungsform wird das ausgeleitete Produkt, das eine Temperatur von beispielsweise 80 °C bis 85 °C aufweisen kann, einer Fest-Flüssig-Trennung 420 unterzogen. Die dabei erhaltene flüssige Produktkomponente, aus der Feststoffanteile des Produkts abgezogen wurden und die beispielsweise eine Temperatur von 60 °C aufweist, wird mithilfe von von einem Kaltwassertank gelieferten Kaltwasser, das beispielsweise eine Temperatur von 15 °C aufweist, in einem Wärmetauscher gekühlt 425. Die Kühlung der flüssigen Produktkomponente kann zusätzlich oder alternativ mithilfe von aus dem Energiespeichertank 115 gelieferten Wasser erfolgen. Das (beispielsweise auf eine Temperatur von 55 °C) erwärmte Kaltwasser kann in einem weiteren Wärmetauscher mithilfe von Heizwasser aus dem Energiespeichertank weiter erwärmt werden und dann dem Warmwasserspeichertank zugeleitet werden. Das in dem weiteren Wärmetauscher abgekühlte Heizwasser aus dem Energiespeichertank kann diesem als etwas kälteres Warmwasser wieder zugeleitet werden oder ebenfalls dem Warmwasserspeichertank zugeleitet werden.

Die gekühlt flüssige Produktkomponente wird mit Zutaten, wie etwa Kalzium, Salz, Proteine, Zucker, Öl, Gewürze, Aromen, Stabilisierungsmittel, etc., und/oder Wasser versetzt 430, um ein Lebensmittelprodukt, beispielsweise Hafermilch, Sojamilch oder Mandelmilch, zu erhalten.

Das Lebensmittelprodukt wird einer Vorrichtung zur Pasteurisierung oder Sterilisation zugeleitet, in der es pasteurisiert oder sterilisiert wird 435. Die bei der Pasteurisierung oder Sterilisation anfallende Abwärme der Vorrichtung zur Pasteurisierung oder Sterilisation wird wiedergewonnen 440, beispielsweise durch Erwärmen von Wasser, und beispielsweise dem Energiespeichertank und/oder dem Warmwasserspeichertank zur Zwischenspeicherung zugeführt.

Einzelne Verfahrensschritte jedes der in den Figuren 2 bis 4 veranschaulichten Verfahren können geeignet mit Schritten der jeweiligen anderen Verfahren kombiniert werden.

## Patentansprüche

1. Anlage (100) zur Herstellung von Lebensmitteln auf Pflanzenbasis, umfassend
ein beheizbares Maischegefäß (105), das insbesondere für eine enzymatische Hydrolyse einer stärkehaltigen Suspension ausgebildet ist;
insbesondere einen ersten Wärmetauscher (125), der über eine Auslassleitung mit einem Auslass des Maischegefäßes (105) zum Kühlen eines von dem Maischegefäß (105) ausgelassenen Produkts verbunden ist;
einen Energiespeichertank (115), der mit dem Maischegefäß (105) zur Lieferung von Wärme und insbesondere mit dem ersten Wärmetauscher (125) verbunden ist, und der zur Aufnahme von in der Anlage (100) gewonnener rekuperativer Wärme ausgebildet und angebunden ist;
eine Fest-Flüssig-Trenneinrichtung (130), die über eine Auslassleitung mit einem Auslass des Maischegefäßes (105) verbunden ist und dazu ausgebildet ist, aus einem von dem Maischegefäß (105) ausgelassenen Produkt eine flüssige Produktkomponente zu trennen; und
eine Vorrichtung zur Pasteurisierung oder Sterilisation (165), die dazu ausgebildet ist, die von der Fest-Flüssig-Trenneinrichtung (130) bereitgestellte flüssige Produktkomponente zu pasteurisieren oder sterilisieren.

2. Die Anlage (100) gemäß Anspruch 1, die weiterhin umfasst
einen Kaltwassertank (140) zum Speichern von Kaltwasser;
einen zweiten Wärmetauscher (135), der einerseits mit dem Kaltwassertank (140) und/oder dem Energiespeichertank (115) und andererseits mit der Fest-Flüssig-Trenneinrichtung (130) zum Abkühlen der von der Fest-Flüssig-Trenneinrichtung (130) bereitgestellten flüssigen Produktkomponente verbunden ist; und
einen Tank (155), der dazu ausgebildet ist, die von dem zweiten Wärmetauscher (135) gekühlte flüssige Produktkomponente zu speichern und mit Zutaten und/oder Wasser zu mischen, um ein Lebensmittelprodukt zu erhalten oder ein durch Mischen der gekühlten flüssigen Produktkomponente mit Zutaten und/oder Wasser erhaltenes Lebensmittelprodukt zu speichern.

3. Die Anlage gemäß Anspruch 2, die weiterhin einen dritten Wärmetauscher (160) umfasst, der mit einem Auslass des Tanks (155) zum Wiedergewinnen von Kälte aus dem Tank (155) ausgelassenen Lebensmittelprodukt verbunden ist; und die insbesondere eine Kühleinrichtung (150) umfasst, die dazu ausgebildet ist, die von dem zweiten Wärmetauscher (135) gekühlte flüssige Produktkomponente weiter abzukühlen.

4. Die Anlage (100) gemäß Anspruch 2 oder 3, in der der dritte Wärmetauscher (160) mit dem Kaltwassertank (140) und/oder dem zweiten Wärmetauscher (135) verbunden ist.

5. Die Anlage (100) gemäß einem der Ansprüche 2 bis 4, die weiterhin einen vierten Wärmetauscher (145) umfasst, der mit dem zweiten Wärmetauscher (135) und dem Energiespeichertank (115) verbunden ist.

6. Die Anlage (100) gemäß Anspruch 5, die weiterhin umfasst
einen Warmwassertank (110) zum Speichern von Warmwasser; und
eine Vormaischeinrichtung (107), die an dem Maischegefäß (105) angeschlossen und mit dem Warmwassertank (110) verbunden und zum Mischen von dem Warmwassertank (110) gelieferten Warmwasser mit einem Pflanzensubstrat ausgebildet ist;
und wobei
der Warmwassertank (110) mit dem zweiten Wärmetauscher (135) und/oder dem vierten Wärmetauscher (145) verbunden ist.

7. Die Anlage (100) gemäß einem der vorhergehenden Ansprüche, die weiterhin eine Abwärmerückgewinnungseinrichtung (170) umfasst, die dazu ausgebildet ist, Abwärme von der Vorrichtung zur Pasteurisierung oder Sterilisation (165) zurückzugewinnen.

8. Die Anlage (100) gemäß Anspruch 7, in der die Vorrichtung zur Pasteurisierung oder Sterilisation (165)
eine Ultrahocherhitzungsvorrichtung ist, die dazu ausgebildet ist, ein Dampf-Infusionsverfahren oder ein Dampf-Injektionsverfahren auszuführen und insbesondere einen Flash-Kühler, der dazu ausgebildet ist, Dampf aus dem sterilisierten Produkt auszutreiben, und einen Kondensator, der dazu ausgebildet ist, den ausgetriebenen Dampf zu kondensieren, umfasst; und wobei
die Abwärmerückgewinnungseinrichtung (170) dazu ausgebildet ist, die Abwärme in Form der Kondensationswärme des Dampfes und/oder der Wärme des Kondensats zurückzugewinnen;
und insbesondere weiterhin mit einer
Dampferzeugungseinrichtung (175), die dazu ausgebildet ist, Wasser zu verdampfen und den Dampf an die Ultrahocherhitzungsvorrichtung zu liefern; und
einer Einrichtung zum Vorwärmen des zu verdampfenden Wassers mithilfe von aus dem Energiespeichertank (115) gelieferter Wärme.

9. Die Anlage (100) gemäß Anspruch 7 oder 8, in der die Abwärmerückgewinnungseinrichtung (170) mit dem Energiespeichertank (115) zum Speichern von von der Vorrichtung zur Pasteurisierung oder Sterilisation (165) zurückgewonnener Wärme verbunden ist.

10. Die Anlage (100) gemäß einem der Ansprüche 7 bis 9 in Kombination mit Anspruch 5 oder 6, wobei der Warmwassertank (110) und/oder der Energiespeichertank (115) mit der Abwärmerückgewinnungseinrichtung (170) zum Speichern von von der Vorrichtung zur Pasteurisierung oder Sterilisation (165) zurückgewonnener Wärme verbunden ist.

11. Die Anlage (100) gemäß einem der vorhergehenden Ansprüche, die weiterhin eine Wärmepumpe umfasst, die dazu ausgebildet ist, Abwärme einer Komponente der Anlage (100) auf ein Niveau zu pumpen, welches zur Beheizung des Energiespeichertanks (115), des Maischegefäßes (105) und/oder der Vorrichtung zur Pasteurisierung oder Sterilisation (165) genutzt werden kann und/oder dazu ausgebildet ist, einen in der Anlage (100) genutzten Kälteträger zur rekuperativen Kühlung des einen oder der mehreren Tanks (155) und/oder des Kaltwassertanks (140) und/oder der rekuperativen Kühlung der Vorrichtung zur Pasteurisierung oder Sterilisation (165) zu kühlen.

12. Verfahren zur Herstellung von Lebensmitteln auf Pflanzenbasis, mit den Schritten:
Zuführen (205) von Wärme aus einem Energiespeichertank (115) zu einem Maischegefäß (105);
Durchführen (210) eines Einmaischens, insbesondere einer enzymatischen Hydrolyse, einer Suspension, die Wasser und ein Pflanzensubstrat umfasst, in dem Maischegefäß (105), um ein Produkt zu erhalten;
Ausleiten (215) des Produkts aus dem Maischegefäß (105);
Durchführen (220) einer Fest-Flüssig-Trennung des ausgeleiten Produkts, um eine flüssige Produktkomponente zu erhalten;
Kühlen (225) der flüssigen Produktkomponente mithilfe von von einem Kaltwassertank (140) gelieferten Kaltwasser und/oder von von dem Energiespeichertank (115) gelieferten Wasser;
insbesondere Kühlen (230) der mithilfe des Kaltwassers gekühlten flüssigen Produktkomponente mithilfe einer Kühleinrichtung (150);
Lagern der gekühlten flüssigen Produktkomponente in einem Mischtank (155);
Versetzen (235) der in dem Mischtank (155) gelagerten gekühlten flüssigen Produktkomponente mit Zutaten und/oder Wasser, um das Lebensmittel zu erhalten;
Ausleiten (240) des Lebensmittels aus dem Mischtank (155);
Wiedergewinnen (245) von Kälte aus dem aus dem Mischtank (155) ausgeleiteten Lebensmittel, um ein erwärmtes Lebensmittel erhalten; und
Pasteurisieren oder Sterilisieren (250) des erwärmten Lebensmittels mithilfe einer Vorrichtung zur Pasteurisierung oder Sterilisation (165).

13. Das Verfahren gemäß Anspruch 12, weiterhin mit Rückgewinnen von Wärme von der Vorrichtung zur Pasteurisierung oder Sterilisation (165).

14. Verfahren zur Herstellung von Lebensmitteln auf Pflanzenbasis, mit den Schritten:
Zuführen (305) von Wärme aus einem Energiespeichertank (115) zu einem Maischegefäß (105);
Durchführen (310) eines Einmaischens, insbesondere einer enzymatischen Hydrolyse, einer Suspension, die Wasser und ein Pflanzensubstrat umfasst, in dem Maischegefäß (105), um ein Produkt zu erhalten;
Ausleiten (315) des Produkts aus dem Maischegefäß (105);
Durchführen (320) einer Fest-Flüssig-Trennung des ausgeleiten Produkts, um eine flüssige Produktkomponente zu erhalten;
Kühlen (325) der flüssigen Produktkomponente mithilfe von von einem Kaltwassertank (140) gelieferten Kaltwasser und/oder von von dem Energiespeichertank (115) gelieferten Wasser;
insbesondere Kühlen (330) der mithilfe des Kaltwassers gekühlten flüssigen Produktkomponente mithilfe einer Kühleinrichtung (150);
Lagern der mithilfe der Kühleinrichtung gekühlten flüssigen Produktkomponente in einem Mischtank (155);
Versetzen (335) der in dem Mischtank (155) gelagerten gekühlten flüssigen Produktkomponente mit Zutaten und/oder Wasser, um das Lebensmittel zu erhalten;
Ausleiten (340) des Lebensmittels aus dem Mischtank (155);
Pasteurisieren oder Sterilisieren (345) des aus dem Mischtank (155) ausgeleiteten Lebensmittels mithilfe einer Vorrichtung zur Pasteurisierung oder Sterilisation (165); und
Rückgewinnen (350) von Wärme von der Vorrichtung zur Pasteurisierung oder Sterilisation (165).

15. Verfahren zur Herstellung von Lebensmitteln auf Pflanzenbasis, mit den Schritten:
Zuführen (405) von Wärme aus einem Energiespeichertank (115) zu einem Maischegefäß (105);
Durchführen (410) eines Einmaischens, insbesondere einer enzymatischen Hydrolyse, einer Suspension, die Wasser und ein Pflanzensubstrat umfasst, in dem Maischegefäß (105), um ein Produkt zu erhalten;
Ausleiten (415) des Produkts aus dem Maischegefäß (105);
Durchführen (420) einer Fest-Flüssig-Trennung des ausgeleiten Produkts, um eine flüssige Produktkomponente zu erhalten;
Kühlen (425) der flüssigen Produktkomponente mithilfe von von einem Kaltwassertank (140) gelieferten Kaltwasser und/oder von von dem Energiespeichertank (115) gelieferten Wasser;
Versetzen (430) der gekühlten flüssigen Produktkomponente mit Zutaten und/oder Wasser, um das Lebensmittel zu erhalten;
Pasteurisieren oder Sterilisieren (435) des Lebensmittels mithilfe einer Vorrichtung zur Pasteurisierung oder Sterilisation (165); und
Rückgewinnen (440) von Wärme von der Vorrichtung zur Pasteurisierung oder Sterilisation (165).
